# FASCICULE DE BREVET EUROPEEN

(11) **EP 3 632 731 B1**
(45) Date de publication et mention de la délivrance du brevet: **15.07.2026**
(21) Numéro de dépôt: 19201374.6
(22) Date de dépôt: 04.10.2019
(51) Int. Cl.: B60K 25/08, B61D 43/00, B60L 15/20, B60L 3/00, B61C 3/02, B61C 15/02, B60K 1/02, B60K 1/00, B61C 9/38

(54) **DISPOSITIF DE TRACTION POUR UN VÉHICULE**
ZUGVORRICHTUNG FÜR FAHRZEUG
TRACTION DEVICE FOR A VEHICLE

(30) Priorité: 05.10.2018 FR 1859268
(43) Date de publication de la demande: 08.04.2020
(73) Titulaire: ALSTOM Holdings, 93400 Saint-Ouen-sur-Seine (FR)
(72) Inventeur: MORTREUX, Francis, 78600 MAISONS-LAFFITTE (FR)
(74) Mandataire: Plasseraud IP

(56) Documents cités:
- WO-A1-2014/029582
- DE-A1- 19 606 771
- FR-A1- 2 997 047
- FR-A1- 3 052 729
- US-A1- 2002 017 405

## Description

La présente invention concerne un dispositif de traction pour un véhicule, notamment pour un véhicule ferroviaire.

La présente invention concerne aussi un véhicule, notamment un véhicule ferroviaire comprenant un tel dispositif de traction.

Il est connu de l'état de la technique des dispositifs de traction comportant au moins deux moteurs de traction comprenant chacun un arbre de sortie. Chaque arbre de sortie est destiné à entraîner en rotation un essieu respectif d'un véhicule. Le dispositif de traction comprend dans certains cas des moteurs de contrôle visant à compenser les éventuelles différences de positions angulaires et/ou de vitesses de rotation des moteurs de traction.

Néanmoins, de tels moteurs de contrôle peuvent augmenter la consommation d'énergie du dispositif de traction, ainsi que le poids et le volume dudit dispositif lorsque de tels moteurs ont une alimentation dédiée.

En outre, pour parer à des défaillances de l'alimentation des moteurs de traction, le dispositif de traction comprend généralement un ensemble formé d'une batterie chargée par un chargeur de batterie. Cependant, un tel ensemble contribue au poids et au volume du dispositif de traction, ainsi qu'à la consommation d'énergie.

Le document FR 3 052 729 A1 décrit un dispositif de traction pour un véhicule. Le dispositif de traction comprend au moins deux moteurs synchrones, ainsi que deux moteurs de contrôle commandés par des moyens de commande. Une unité d'alimentation est commune à l'ensemble des moteurs.

Il existe donc un besoin pour un dispositif de traction ayant un volume, un poids et une consommation d'énergie réduite et capable de compenser les défaillances de l'alimentation des moteurs de traction.

L'invention a aussi pour objet un dispositif de traction selon la revendication 1.

Selon d'autres aspects avantageux de l'invention, le dispositif de traction comprend une ou plusieurs des caractéristiques des revendications 2 à 11.

L'invention a, en outre, pour objet un véhicule selon la revendication 12.

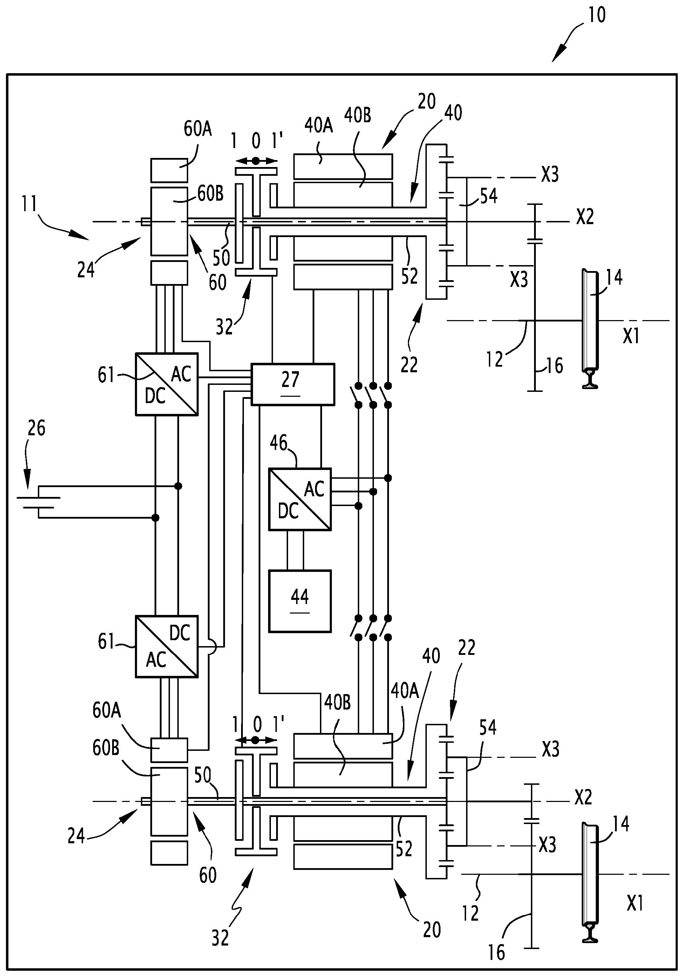

D'autres caractéristiques et avantages de l'invention apparaîtront à la lecture de la description qui suit de modes de réalisation de l'invention, donnés à titre d'exemple uniquement et en référence à la figure unique qui est une représentation schématique partielle d'un exemple d'implémentation d'un dispositif de traction.

Un véhicule 10 et un dispositif de traction 11 sont illustrés par la figure.

Le véhicule 10 est, par exemple, un véhicule ferroviaire, tel qu'un train, un tramway, ou encore un tram-train.

Le véhicule 10 comporte au moins un essieu 12 portant deux roues 14. Dans l'exemple illustré par la figure, le véhicule 10 comporte au moins deux essieux 12 portant chacun deux roues 14.

Dans le cas d'un véhicule ferroviaire, ledit véhicule 10 comporte habituellement au moins un bogie, comprenant au moins lesdits essieux 12. Chaque essieu 12 est mobile en rotation autour d'un premier axe X1.

Avantageusement et comme illustré par la figure, chaque essieu 12 est solidaire en rotation avec une roue dentée 16 par l'intermédiaire de laquelle ledit essieu 12 est relié cinématiquement au dispositif de traction 11.

Le dispositif de traction 11 comprend au moins deux moteurs de traction 20, un bloc de transmission 22 pour chaque moteur de traction 20, un moteur de contrôle 24 pour au moins l'un des moteurs de traction 20, une unité de stockage d'énergie 26 et une unité de contrôle-commande 27. Optionnellement, le dispositif de traction 11 comprend aussi une unité d'immobilisation 32, avantageusement, contrôlée par l'unité de contrôle-commande 27.

Chaque moteur de traction 20 comprend un arbre de sortie 40. Chaque moteur de traction 20 comprend, en outre, un stator 40A et un rotor 40B. Le rotor 40B est mobile en rotation par rapport au stator 40A, et est solidaire en rotation de l'arbre de sortie 40 du moteur de traction 20. Chaque arbre de sortie 40 est mobile en rotation autour d'un deuxième axe X2.

Dans l'exemple illustré par la figure, les moteurs de traction 20 sont des moteurs à rotor intérieur, c'est-à-dire que le stator 40A se trouve à l'extérieur du rotor 40B.

En variante, les moteurs de traction 20 sont des moteurs à rotor extérieur, c'est-à-dire que le rotor 40B se trouve à l'extérieur du stator 40A.

Avantageusement, chaque moteur de traction 20 est un moteur synchrone. Un tel moteur synchrone est plus efficace et présente une meilleure compacité qu'un moteur asynchrone.

Chaque moteur de traction 20 est alimenté par une unité d'alimentation 44. Selon l'invention comme illustré par la figure, l'unité d'alimentation 44 est différente de l'unité de stockage d'énergie 26. Dans le cas d'un véhicule ferroviaire, l'unité d'alimentation 44 est, par exemple, une caténaire ou un rail de traction.

En variante, l'unité d'alimentation 44 est une batterie ou une pile à combustible.

Avantageusement, le dispositif de traction 11 comprend un unique convertisseur 46 reliant l'unité d'alimentation 44 et plusieurs, voire l'ensemble, des moteurs de traction 20. Le convertisseur 46 est propre à faire fonctionner les moteurs de traction 20 dans les quatre quadrants (Génératrice sens arrière, Moteur sens avant, Moteur sens arrière, Génératrice sens avant). Dans l'exemple, illustré par la figure, le convertisseur 46 est un onduleur. Le contrôle du convertisseur 46 est, avantageusement, effectué par l'unité de contrôle-commande 27.

Chaque bloc de transmission 22 relie l'arbre de sortie 40 du moteur de traction 20 correspondant à un essieu 12 distinct du véhicule 10.

Chaque bloc de transmission 22 comprend des éléments. Au moins l'un des éléments est solidaire en rotation avec l'arbre de sortie 40 du moteur de traction 20 correspondant. En outre, au moins l'un des éléments est propre à entraîner en rotation un essieu 12 du véhicule 10.

Dans l'exemple illustré par la figure, chaque bloc de transmission 22 est un train épicycloïdal complété par un réducteur.

Chaque train épicycloïdal comprend un premier, un deuxième et un troisième élément, choisis parmi un planétaire intérieur 50, un planétaire extérieur 52, et un porte-satellites 54 portant au moins un satellite engrenant avec le planétaire intérieur 50 et avec le planétaire extérieur 52. Le planétaire intérieur 50 et le planétaire extérieur 52 sont coaxiaux. Le premier élément est solidaire en rotation avec l'arbre de sortie 40 du moteur de traction 20 correspondant. Le deuxième élément est propre à entraîner en rotation un essieu 12 respectif du véhicule 10. Le troisième élément est solidaire en rotation avec le moteur de contrôle 24 correspondant.

Dans l'exemple illustré par la figure, le premier élément est formé par le planétaire extérieur 52. Le planétaire extérieur 52 est alors solidaire en rotation avec l'arbre de sortie 40, et donc mobile en rotation autour du deuxième axe X2. Le planétaire extérieur 52 présente une forme générale de révolution autour du deuxième axe X2. Le planétaire extérieur 52 présente, par exemple, une forme de couronne, comprenant une surface intérieure dentée.

Dans l'exemple décrit, le deuxième élément est formé par le porte-satellites 54.

Le porte-satellites 54 comporte au moins un satellite, généralement plusieurs satellites, chacun engrenant avec le planétaire intérieur 50 et avec le planétaire extérieur 52 (notamment avec la surface intérieure dentée). Ainsi, chaque satellite est disposé radialement entre le planétaire intérieur 50 et le planétaire extérieur 52. Chaque satellite présente une forme générale de révolution autour d'un troisième axe respectif X3, et chaque satellite est mobile en rotation autour dudit troisième axe respectif X3. Le porte-satellites 54 comporte, par exemple, une partie circulaire dentée, mobile en rotation autour du deuxième axe X2, et complémentaire de la roue dentée 16 et engrenant avec ladite roue dentée 16. Le porte-satellites 54 comporte également, pour chaque satellite, une partie de support en liaison pivot avec ledit satellite, ladite liaison pivot étant définie autour du troisième axe X3 correspondant.

Dans l'exemple décrit, le troisième élément est le planétaire intérieur 50.

En outre, dans cet exemple, l'arbre de sortie 40 du moteur de traction 20, l'organe de sortie 60 du moteur de contrôle 24, le planétaire intérieur 50, le planétaire extérieur 52 et le porte-satellites 54 correspondants sont coaxiaux.

Le ou chaque moteur de contrôle 24 comprend un organe rotatif de sortie 60. L'organe de sortie 60 engrène avec l'un des éléments du bloc de transmission 22. Dans l'exemple illustré par la figure, chaque organe rotatif de sortie 60 engrène avec le planétaire intérieur 50 du bloc de transmission 22 du moteur de traction 20 correspondant. Chaque organe rotatif de sortie 60 est alors mobile en rotation autour du deuxième axe X2.

Chaque moteur de contrôle 24 comprend, en outre, un stator 60A et un rotor 60B. Le rotor 60B est mobile en rotation par rapport au stator 60A, et est solidaire en rotation de l'organe rotatif de sortie 60 du moteur de contrôle 24.

Chaque moteur de contrôle 24 est propre à, dans un mode moteur, entraîner en rotation au moins l'un des éléments du bloc de transmission 22 correspondant, et à, dans un mode générateur, être entraîné en rotation par au moins l'un des éléments du bloc de transmission 22 correspondant,
Le ou chaque moteur de contrôle 24 est, par exemple, un moteur synchrone ou un moteur asynchrone.

De préférence, le nombre de moteurs de contrôle 24 est égal au nombre de moteurs de traction 20, chaque moteur de contrôle 24 étant associé à un moteur de traction 20 distinct. Dans l'exemple illustré par la figure, le dispositif de traction 11 comprend deux moteurs de traction 20 associés chacun à un moteur de contrôle 24 distinct.

Avantageusement, la puissance de chaque moteur de contrôle 24 est très inférieure à la puissance de chaque moteur de traction 20. Par exemple, la puissance de chaque moteur de contrôle 24 est inférieure ou égale à 5% de la puissance de chaque moteur de traction 20. Ainsi, les moteurs de contrôle 24 n'impliquent pas de consommation électrique additionnelle notable.

L'unité de stockage d'énergie 26 est propre à échanger de l'énergie avec chaque moteur de contrôle 24 en fonction du mode, moteur ou générateur, desdits moteurs de contrôle 24.

L'unité de stockage d'énergie 26 est, par exemple, une batterie. La capacité de stockage de la batterie est définie par les cas d'usage du dispositif de traction 11, en particulier en cas de défaillance ou d'indisponibilité de l'unité d'alimentation 44.

Avantageusement, l'unité de stockage d'énergie 26 est propre à recevoir de l'énergie seulement en provenance du ou des moteurs de contrôle 24. Cela permet donc de s'affranchir d'un chargeur, type chargeur de batterie, pour charger l'unité de stockage d'énergie 26.

Le dispositif de traction 11 comprend, en outre, pour chaque moteur de contrôle 24, un convertisseur 61 reliant l'unité de stockage d'énergie 26 et ledit moteur de contrôle 24. Chaque convertisseur 61 est propre à faire fonctionner le moteur de contrôle 24 correspondant dans les quatre quadrants, dans les deux sens de rotation, de sorte que le moteur de contrôle 24 soit :
- en mode moteur : alimenté par l'unité de stockage 26 pour entraîner en rotation au moins l'un des éléments du bloc de transmission 22 correspondant et notamment le planétaire intérieur 50, et
- en mode générateur : propre à fournir de l'énergie à l'unité de stockage 26, en étant entraîné en rotation par au moins l'un des éléments du bloc de transmission 22 correspondant et notamment le planétaire intérieur 50.

Le convertisseur 61 est, par exemple, un onduleur. Le contrôle du ou des convertisseurs 61 est, avantageusement, effectué par l'unité de contrôle-commande 27.

L'unité de stockage d'énergie 26 est, par exemple, connectée à d'autres utilitaires du véhicule 10 de sorte à alimenter lesdits utilitaires. De tels utilitaires sont, par exemple, le système de climatisation ou le système d'éclairage du véhicule 10.

L'unité de contrôle-commande 27 est propre à mesurer ou à recevoir une mesure de la position angulaire et/ou la vitesse de rotation de l'arbre de sortie 40 de chaque moteur de traction 20. Avantageusement, l'unité de contrôle-commande 27 est propre à calculer les différences de vitesse de rotation entre les arbres de sortie 40 des moteurs de traction 20 et/ou les décalages angulaires entre lesdits arbres de sortie 40.

L'unité de contrôle-commande 27 est propre à recevoir un signal de commande et à faire fonctionner le ou les moteurs de contrôle 24 et les moteurs de traction 20 par l'intermédiaire des convertisseurs 61 et 46 en fonction du signal de commande et, avantageusement, d'autres signaux en entrée de l'unité de contrôle-commande 27, comme par exemple l'état de charge de l'unité de stockage d'énergie 26 ou l'état de bon fonctionnement des différents organes du dispositif de traction 11.

Le signal de commande est, par exemple, un signal calculé à partir d'une commande de l'utilisateur via une interface homme-machine ou encore est un signal généré automatiquement par une unité de traitement en fonction de différents paramètres tels que la vitesse du véhicule 10.

Avantageusement, l'unité de contrôle-commande 27 est propre à commander chaque moteur de contrôle 24 selon une vitesse de rotation de l'élément correspondant du bloc de transmission 22. Par exemple, une telle vitesse de rotation est établie de sorte que la différence de position angulaire et/ou la différence de vitesse de rotation entre les arbres de sortie 40 soit minimale.

Dans l'exemple illustré par la figure, l'unité de contrôle-commande 27 est propre à commander une vitesse de rotation du planétaire intérieur 50 correspondant en fonction des vitesses de rotation de chaque arbre de sortie 40 et/ou des positions angulaires de chaque arbre de sortie 40. Plus particulièrement, l'unité de contrôle-commande 27 est configurée pour commander les vitesses de rotation des planétaires intérieurs 50 de manière à annuler les différences de vitesse des arbres de sortie 40 et/ou les décalages angulaires entre lesdits arbres de sortie 40.

Ainsi, lorsque les vitesses des arbres de sortie 40 sont sensiblement identiques, et/ou que le décalage angulaire est sensiblement nul, l'unité de contrôle-commande 27 entraîne en rotation les planétaires intérieurs 50 à une vitesse identique, contribuant ainsi à la force de traction/freinage délivrée par le dispositif de traction 11 si l'état de l'unité de stockage d'énergie le permet. En revanche, en cas d'une différence de vitesse et/ou de position angulaire entre les arbres de sortie 40, l'unité de contrôle-commande 27 fait varier la vitesse d'au moins l'un des planétaires intérieurs 50 pour annuler une telle différence.

Par exemple, lorsque le véhicule 10 est en mode démarrage, l'unité de contrôle-commande 27 est propre à commander le ou les moteurs de contrôle 24 pour compenser les différences angulaires des moteurs de traction 20 avant de démarrer lesdits moteurs de traction 20 par l'intermédiaire du convertisseur 46.

Par exemple, lorsque le véhicule 10 est en phase normale de marche, l'unité de contrôle-commande 27 est propre à commander le ou les moteurs de contrôle 24 et le convertisseur 61 pour emmagasiner de l'énergie générée par la rotation du ou des moteurs de contrôle 24 entrainés par au moins l'un des éléments du bloc de transmission 22 correspondant et stocker ladite énergie dans l'unité de stockage d'énergie 26.

Par exemple, lorsque le véhicule 10 est en phase freinage, l'unité de contrôle-commande 27 est propre à commander le ou les moteurs de contrôle 24 pour emmagasiner de l'énergie et stocker ladite énergie dans l'unité de stockage d'énergie 26, et, ainsi, aider au freinage.

Par exemple, lorsque l'un des moteurs de traction 20 est non fonctionnel, l'unité de contrôle-commande 27 est propre à commander le moteur de contrôle 24 correspondant pour empêcher l'entraînement du rotor 40B dudit moteur de traction 20 par l'essieu 12 correspondant. En variante, la commande de chaque moteur de contrôle 24 selon une vitesse de rotation de l'élément correspondant du bloc de transmission 22, établie en fonction de la position angulaire et/ou de la vitesse de rotation mesurée de chaque arbre de sortie 40, est effectuée par une autre unité de commande du dispositif de traction 11, distincte de l'unité de contrôle-commande 27.

L'unité d'immobilisation 32 est propre à immobiliser au moins l'un des moteurs de traction 20 associé à un moteur de contrôle 24. Une telle immobilisation est, avantageusement, réversible.

Plus précisément, l'unité d'immobilisation 32 est mobile selon au moins deux positions : une première position (ou position 0 sur la figure) dans laquelle les rotors 40B, 60B des moteurs de traction 20 et de contrôle 24 correspondants sont libres et une deuxième position (ou position 1' sur la figure) dans laquelle seul le rotor 40B du moteur de traction 20 correspondant est immobilisé. Ainsi, dans l'exemple illustré par la figure, lorsque l'unité d'immobilisation 32 immobilise le rotor 40B de l'un des moteurs de traction 20, le planétaire extérieur 52 du bloc de transmission 22 correspondant est alors immobilisé en rotation. Lorsque le rotor 40B du moteur de traction 20 n'est pas immobilisé en rotation par l'unité d'immobilisation 32, le planétaire extérieur 52 du bloc de transmission 22 correspondant est libre en rotation autour du deuxième axe X2.

Par exemple, l'unité d'immobilisation 32 comprend au moins un frein propre à immobiliser la couronne du planétaire extérieur 52 dans la deuxième position et à relâcher la couronne du planétaire extérieur 52 dans la première position.

De préférence, l'unité d'immobilisation 32 est, également, mobile selon une troisième position (ou position 1 sur la figure) dans laquelle seul le rotor 60B du moteur de contrôle 24 correspondant est immobilisé. Ainsi, dans l'exemple illustré par la figure, lorsque l'unité d'immobilisation 32 immobilise le rotor 60B de l'un des moteurs de contrôle 24, le planétaire intérieur 50 du bloc de transmission 22 correspondant est alors immobilisé en rotation. Lorsque le rotor 60B du moteur de contrôle 24 n'est pas immobilisé en rotation par l'unité d'immobilisation 32, le planétaire intérieur 50 du bloc de transmission 22 correspondant est libre en rotation autour du deuxième axe X2.

En variante ou en complément, l'unité d'immobilisation 32 comprend au moins un crabot permettant d'immobiliser le moteur défectueux. En cas de défaillance d'un moteur de contrôle 24, le crabot est engagé en troisième position (par exemple, par l'activation d'un électro-aimant), ce qui a pour effet d'immobiliser le rotor 60B du moteur de contrôle 24. Ceci permet de conserver opérationnel le moteur de traction 20 associé au moteur de contrôle 24 défaillant, le contrôle étant reporté sur les autres moteurs de contrôle 24. En cas de perte de l'alimentation du train, le crabot est engagé en deuxième position, ce qui permet d'immobiliser le rotor 40B du moteur de traction 20, et donc de permettre la transmission du couple du moteur de contrôle 24, alimenté par l'unité de stockage d'énergie 26, à l'essieu 12 correspondant.

Le contrôle de l'unité d'immobilisation 32 est, avantageusement, effectué par l'unité de contrôle-commande 27.

L'unité de contrôle-commande 27 est propre, le cas échéant, à détecter une anomalie ou à recevoir un signal d'anomalie pour chaque moteur de traction 20. Dans la présente description, il est entendu par le terme « anomalie » tout dysfonctionnement d'un moteur susceptible de nuire au bon fonctionnement dudit moteur et/ou à l'intégrité dudit moteur.

Par exemple, le signal d'anomalie pour un moteur de traction 20 est généré par le convertisseur 46 relié audit moteur de traction 20. Ainsi, le convertisseur 46 est propre à détecter un court-circuit, dans chaque moteur de traction 20 ou dans un circuit d'alimentation électrique dudit moteur de traction 20. Le convertisseur 46 comprend alors, par exemple, des organes de détection d'un court-circuit, et/ou des organes de mesure de température permettant de détecter une hausse de température au-delà d'un seuil prédéterminé. Ainsi, une anomalie est, par exemple, considérée comme détectée lorsqu'un court-circuit est détecté ou lorsque la température dépasse le seuil prédéterminé.

De préférence, l'unité de contrôle-commande 27 est, en outre, propre, le cas échéant, à détecter une anomalie ou à recevoir un signal d'anomalie pour chacun des moteurs de contrôle 24.

Par exemple, le signal d'anomalie pour un moteur de contrôle 24 est généré par le convertisseur 61 relié audit moteur de contrôle 24. Ainsi, le convertisseur 61 est propre à détecter un court-circuit, dans le moteur de contrôle 24 ou dans un circuit d'alimentation électrique dudit moteur de contrôle 24. Le convertisseur 61 comprend alors, par exemple, des organes de détection d'un court-circuit, et/ou des organes de mesure de température permettant de détecter une hausse de température au-delà d'un seuil prédéterminé.

De préférence, l'unité de contrôle-commande 27 est, en outre, propre, le cas échéant, à détecter ou à recevoir un signal indiquant que l'unité d'alimentation 44 est défaillante ou indisponible.

En fonction de l'état desdits signaux d'anomalies et/ou de disponibilité, l'unité de contrôle-commande 27 est propre à commander l'unité d'immobilisation 32 et/ou les moteurs de contrôle 24.

Ainsi, dans l'exemple illustré par la figure, lorsqu'une anomalie d'un moteur de traction 20 est détectée, telle qu'un court-circuit, le couple appliqué par le moteur de contrôle 24 correspondant à l'organe de sortie 60 et notamment au planétaire intérieur 50 est réduit. En effet, le point de fonctionnement du moteur de contrôle 24 (couple, vitesse) est réglé par l'unité de contrôle-commande 27. Dans ce cas, le couple est réduit et la vitesse de l'organe de sortie 60 augmente mais le produit du couple et de la vitesse reste inférieur à la puissance maximale propre à être délivrée par le moteur de contrôle 24. Le planétaire intérieur 50 est alors libéré en rotation et la répartition de la transmission du mouvement de l'essieu entre le planétaire extérieur 52 et le planétaire intérieur 50 est modifiée. Le planétaire intérieur 50 va se mettre à tourner plus vite et le planétaire extérieur 52 à ralentir jusqu'à l'arrêt complet du planétaire extérieur 52, tandis que le planétaire intérieur 50 tournera avec une vitesse élevée mais un couple très faible voire nul. Dans ce cas, le planétaire intérieur 50 est libéré en rotation et l'essieu ne peut plus entrainer le planétaire extérieur 52 et donc le moteur de traction 20. En d'autres termes, la rotation de l'arbre de sortie 40 dudit moteur de traction 20 n'interfère plus avec la rotation de l'essieu 12. Il est alors possible d'arrêter ledit moteur de traction 20, sans rotation résiduelle due à l'essieu 12, pour remédier à l'anomalie détectée et éventuellement si nécessaire d'immobiliser le moteur de traction, suite à son arrêt, via l'unité d'immobilisation 32.

En effet, dans le dispositif de traction 11 décrit, il n'y a transmission de mouvement et de couple entre l'essieu 12 et le moteur de traction 20 que si le planétaire intérieur assure un couple ayant au moins le même ordre de grandeur que celui qui passe entre l'essieu 12 et le moteur de traction 20.

Le moteur de traction et l'essieu sont ainsi découplés en cas de défaillance du moteur de traction et sont propres à être couplés à nouveau l'un à l'autre facilement et rapidement si la défaillance n'est que passagère. En effet, il suffit de remodifier le couple appliqué au planétaire intérieur en l'augmentant. Si on libère le moteur de traction en le commandant en rotation et qu'on vient appliquer un couple sur le planétaire intérieur par l'intermédiaire du moteur de contrôle, le planétaire intérieur va ralentir jusqu'à s'immobiliser tandis que le planétaire extérieur va tourner plus vite. On peut ainsi remettre en fonction le moteur de traction pour qu'il commande la rotation de l'essieu.

Un tel mode de réalisation permet en cas de défaillance du moteur de traction 20 et notamment de court-circuit, d'éviter que le moteur de traction 20 continue à tourner en étant entrainé par l'essieu alors qu'il est en court-circuit, et ainsi d'éviter qu'une force électro-magnétique générée par le champ tournant du moteur de traction provoque un courant très fort dans la boucle de court-circuit, ce qui conduirait à un échauffement pouvant aller jusqu'à l'incendie.

Lorsqu'une anomalie d'un moteur de contrôle 24 est détectée, le rotor 60B dudit moteur de contrôle 24 est immobilisé par l'unité d'immobilisation 32. Le planétaire intérieur 50 est alors immobilisé en rotation, ce qui permet de préserver le fonctionnement normal du moteur de traction 20 correspondant.

Dans une variante, les fonctions de contrôle et de commande de l'unité de contrôle-commande 27 sont réalisées grâce à plusieurs unités placées à proximité ou intégrés à l'équipement qu'elles contrôlent ou dont elles reçoivent des signaux.

Un exemple de fonctionnement du dispositif de traction 11 va maintenant être décrit.

Durant le fonctionnement du dispositif de traction 11, l'unité de contrôle-commande 27 mesure en continu ou reçoit en continu une mesure de la position angulaire et/ou de la vitesse de rotation de chaque arbre de sortie 40. Avantageusement, l'unité de contrôle-commande 27 calcule les différences de vitesse de rotation entre les arbres de sortie 40 des moteurs de traction 20 et/ou les décalages angulaires entre lesdits arbres de sortie 40.

De même, lorsque le dispositif de traction 11 comprend une unité d'immobilisation 32, l'unité de contrôle-commande 27 surveille en continu (soit directement, soit via la réception de signaux) la présence d'une anomalie sur les moteurs de traction 20 et/ou de contrôle 24.

Au cours du fonctionnement du dispositif de traction 11, l'unité d'immobilisation 32 est maintenue dans la première position tant qu'aucune anomalie n'est détectée.

Initialement, lorsque le véhicule 10 est en phase de démarrage, l'unité de contrôle-commande 27 commande le démarrage du ou des moteurs de contrôle 24 pour compenser les différences angulaires et/ou de vitesses des moteurs de traction 20. L'unité de stockage d'énergie 26 fournit alors de l'énergie au(x) moteur(s) de contrôle. Dans l'exemple illustré par la figure, l'organe de sortie 60 du ou de chaque moteur de contrôle 24 entraîne alors en rotation le planétaire intérieur 50 du train épicycloïdal. Ainsi, en phase de démarrage, en plus de rattraper les positions angulaires et de compenser les écarts de vitesse, les moteurs de contrôle 24 contribuent à l'effort moteur et permettent ainsi d'obtenir de meilleures caractéristiques d'accélération ou de réduire les performances des moteurs de traction 20 sans affecter les performances du système.

Puis, lorsque le véhicule 10 est en phase normale de marche, l'unité de contrôle-commande 27 commande la mise en mode générateur du ou des moteurs de contrôle 24 pour produire de l'énergie et stocker ladite énergie dans l'unité de stockage d'énergie 26. Dans l'exemple illustré par la figure, l'organe de sortie 60 du ou de chaque moteur de contrôle 24 est alors entraîné en rotation par le planétaire intérieur 50 du train épicycloïdal. Ainsi, en phase normale de marche, les moteurs de contrôle 24 jouent le rôle de chargeur de batterie. Compte-tenu de la puissance disponible, il est envisageable d'alimenter par l'unité de stockage d'énergie 26 d'autres fonctions que celles qui y sont connectées habituellement, ce qui conduit à une meilleure disponibilité desdites fonctions.

Puis, lorsque le véhicule 10 est en phase de freinage, l'unité de contrôle-commande 27 commande la mise en mode générateur du ou des moteurs de contrôle 24 pour emmagasiner de l'énergie et stocker ladite énergie dans l'unité de stockage d'énergie 26, et ainsi aider au freinage. Dans l'exemple illustré par la figure, l'organe de sortie 60 du ou de chaque moteur de contrôle 24 est alors entraîné en rotation par le planétaire intérieur 50 du train épicycloïdal. Ainsi, en phase de freinage, les moteurs de contrôle 24 contribuent à l'effort de freinage et permettent d'assurer un freinage électrique jusqu'à zéro km/h, quelle que soit la réceptivité de la ligne près du point d'arrêt. Le dispositif de traction 11 permet donc de s'affranchir d'un freinage mécanique dès lors que l'unité de stockage d'énergie 26 présente suffisamment d'espace de stockage disponible avant le freinage.

En cas d'absence d'alimentation des moteurs de traction 20, les moteurs de contrôle 24 assurent une traction de secours en étant alimentés par l'unité de stockage d'énergie 26. L'unité d'immobilisation 32 en deuxième position immobilise alors le rotor 40B du moteur de traction 20 en rotation, ce qui permet la transmission du couple du moteur de contrôle 24 à l'essieu 12.

En cas de défaillance d'un moteur de traction 20, par exemple, un court-circuit à l'intérieur du moteur, le couple du moteur de contrôle 24 est au moins fortement réduit par rapport au couple de l'ensemble formé par le rotor 40B et le planétaire extérieur 52, voire annulé, ce qui empêche la transmission du mouvement de l'essieu 12 au rotor 40B du moteur de traction 20, comme expliqué précédemment. Le moteur défaillant peut alors être déconnecté électriquement sans nécessiter d'appareillage possédant un pouvoir de coupure important. Un tel système est entièrement réversible et permet l'isolement du moteur de traction 20 de façon temporaire.

Lorsque l'unité de contrôle-commande 27 détecte ou reçoit un signal d'anomalie indiquant que l'un des moteurs de contrôle 24 est non fonctionnel, l'unité de contrôle-commande 27 fait passer l'unité d'immobilisation 32 correspondante dans la troisième position pour immobiliser le rotor 60B dudit moteur de contrôle 24. Les éventuels autres moteurs de contrôle 24 remplacent alors le moteur de contrôle 24 défectueux en compensant les différences angulaires et/ou de vitesses entre les moteurs de traction 20, calculées par l'unité de contrôle-commande 27.

Ainsi, le dispositif de traction 11 permet d'utiliser l'énergie en provenance de l'unité de stockage d'énergie 26 pour alimenter les moteurs de contrôle 24. Comme les moteurs de contrôle 24 peuvent fonctionner en mode moteur ou en mode générateur dans les deux sens de marche, l'unité de stockage d'énergie 26 est susceptible d'être rechargée par l'intermédiaire des moteurs de contrôle 24. Les moteurs de contrôle 24 sont donc contrôlés de manière indépendante. Le dispositif de traction 11 permet donc de s'affranchir d'un chargeur de batterie dédié, ce qui réduit le poids et le volume du dispositif de traction 11, et contribue à stabiliser la consommation d'énergie.

En outre, en cas d'absence d'alimentation des moteurs de traction 20, les moteurs de contrôle 24 associés sont alors susceptibles d'être mis dans un mode moteur et d'être commandés pour remplacer lesdits moteur de traction 20. Cela permet ainsi d'améliorer la disponibilité du dispositif de traction 11 en cas de défaillance de l'alimentation, dans les zones qui ne sont pas équipées ou dans des phases d'exploitation dans lesquelles l'utilisation de l'unité d'alimentation 44 pose problème, et ce sans nécessiter de batterie avec un chargeur dédié.

Le dispositif de traction 11 est également particulièrement adapté pour fonctionner avec des moteurs de traction 20 synchrones du fait de la présence du ou des moteurs de contrôle 24 visant à compenser les différences de positions angulaires et/ou de vitesses de rotation entre les rotors 40B desdits moteurs de traction 20. Ainsi, cela contribue à simplifier le dispositif de traction 11 et à diminuer son poids et son volume, ainsi que son efficacité énergétique.

Un tel dispositif de traction 11 présente donc un volume, un poids et une consommation d'énergie réduite et est capable de compenser les défaillances de l'alimentation des moteurs de traction 20.

L'homme du métier comprendra que l'invention n'est pas limitée au mode de réalisation précédemment décrit.

Par exemple, le dispositif de traction 11 pourrait comporter plus de deux moteurs de traction 20.

Conformément à une autre variante, au moins un parmi les moteurs de traction 20 n'est pas associé à un moteur de contrôle 24.

En outre, les trois éléments de chaque train épicycloïdal sont susceptibles d'être reliés indifféremment à l'un ou l'autre du moteur de traction 20, de l'essieu 12 ou du moteur de contrôle 24 correspondant.

Enfin, le dimensionnement et la gestion de l'énergie de l'unité de stockage 26 peut également répondre à des objectifs d'exploitation différents de ceux précédemment décrits.

## Revendications

1. Ensemble comprenant :
- une unité d'alimentation, et
- un dispositif de traction (11) pour un véhicule (10), notamment pour un véhicule ferroviaire, le dispositif comprenant :
- au moins deux moteurs de traction (20), chaque moteur de traction (20) comprenant un arbre de sortie (40), chaque moteur de traction (20) étant alimenté par l'unité d'alimentation,
- pour chaque moteur de traction (20), un bloc de transmission (22) comprenant des éléments, au moins l'un des éléments étant solidaire en rotation avec l'arbre de sortie (40),
- pour au moins l'un des moteurs de traction (20), un moteur de contrôle (24) associé, le ou chaque moteur de contrôle (24) étant propre à, dans un mode moteur, entraîner en rotation au moins l'un des éléments du bloc de transmission (22) correspondant, et à, dans un mode générateur, être entraîné en rotation par au moins l'un des éléments du bloc de transmission (22) correspondant, le ou les moteur de contrôle (24) visant à compenser les éventuelles différences de positions angulaires et/ou de vitesses de rotation des moteurs de traction (20),
- une unité de stockage d'énergie (26) propre à échanger de l'énergie avec le ou chaque moteur de contrôle (24), l'unité de stockage d'énergie (26) étant différente de l'unité d'alimentation (44), et
- une unité de contrôle-commande (27) du ou de chaque moteur de contrôle (24), propre à recevoir au moins un signal de commande et à commander le ou chaque moteur de contrôle (24) en fonction du au moins un signal de commande.

2. Ensemble selon la revendication 1, dans lequel lorsque le ou l'un des moteurs de contrôle (24) est commandé dans un mode moteur, l'unité de stockage d'énergie (26) fournit de l'énergie audit moteur de contrôle (24), et lorsque le ou l'un des moteurs de contrôle (24) est commandé dans un mode générateur, l'unité de stockage d'énergie (26) reçoit de l'énergie en provenance dudit moteur de contrôle (24).

3. Ensemble selon la revendication 1 ou 2, dans lequel chaque bloc de transmission (22) est un train épicycloïdal, chaque train épicycloïdal comprenant un premier, un deuxième et un troisième éléments, choisis parmi un planétaire intérieur (50), un planétaire extérieur (52), et un porte-satellites (54) portant au moins un satellite engrenant avec le planétaire intérieur (50) et avec le planétaire extérieur (52), le premier élément étant solidaire en rotation avec l'arbre de sortie (40) du moteur de traction (20) correspondant, le deuxième élément étant propre à entraîner en rotation un essieu (12) respectif du véhicule (10), le troisième élément étant configuré pour être solidaire en rotation avec un arbre de sortie du moteur de contrôle (24) correspondant.

4. Ensemble selon la revendication 3, dans lequel, pour au moins un train épicycloïdal, le premier élément est le planétaire extérieur (52), le deuxième élément est le porte-satellites (54) et le troisième élément est le planétaire intérieur (50).

5. Ensemble selon l'une quelconque des revendications 1 à 4, dans lequel chacun des moteurs de traction (20) et du ou des moteurs de contrôle (24) comprend un stator (40A, 60A) et un rotor (40B, 60B) mobile en rotation par rapport au stator (40A, 60A), le dispositif de traction (11) comprenant une unité d'immobilisation (32) pour au moins l'un des moteurs de traction (20) associé à un moteur de contrôle (24), l'unité d'immobilisation (32) étant mobile selon au moins deux positions : une première position dans laquelle les rotors (40B, 60B) des moteurs de traction (20) et de contrôle (24) correspondants sont libres et une deuxième position dans laquelle seul le rotor (40B) du moteur de traction (20) correspondant est immobilisé,
l'unité de contrôle-commande (27) étant propre à détecter une absence d'alimentation des moteurs de traction (20) correspondant à un arrêt des moteurs de traction, l'unité de contrôle-commande (27) étant, également, propre à maintenir l'unité d'immobilisation (32) dans la première position lorsque l'unité de contrôle-commande (27) ne détecte pas d'absence d'alimentation du moteur de traction (20) correspondant, et à faire passer l'unité d'immobilisation (32) dans la deuxième position lorsque l'unité de contrôle-commande (27) détecte une absence d'alimentation du moteur de traction (20) correspondant.

6. Ensemble (11) selon la revendication 5, dans lequel l'unité d'immobilisation (32) est, en outre, mobile selon une troisième position dans laquelle seul le rotor (60B) du moteur de contrôle (24) correspondant est immobilisé, l'unité de contrôle-commande (27) étant, en outre, propre à détecter une anomalie ou à recevoir un signal d'anomalie pour chaque moteur de contrôle (24), et propre à faire passer l'unité d'immobilisation (32) dans la troisième position lorsqu'une anomalie du moteur de contrôle (24) correspondant est détectée.

7. Ensemble selon l'une quelconque des revendications 1 à 6, dans lequel l'unité de contrôle-commande (27) est propre à mesurer ou à recevoir une mesure d'une position angulaire et/ou d'une vitesse de rotation de l'arbre de sortie (40) de chaque moteur de traction, et à commander chaque moteur de contrôle (24) selon une vitesse de rotation désirée de l'élément correspondant du bloc de transmission (22), ladite vitesse de rotation désirée étant établie en fonction de la position angulaire et/ou de la vitesse de rotation mesurée pour l'arbre de sortie (40) de chaque moteur de traction.

8. Ensemble selon l'une quelconque des revendications 1 à 7, dans lequel l'unité de contrôle-commande (27) est propre à détecter une anomalie ou à recevoir un signal d'anomalie pour chaque moteur de traction (20) et à réduire le couple appliqué par le moteur de contrôle (24) associé lorsqu'une anomalie du moteur de traction (20) associé est détectée.

9. Ensemble selon la revendication 8, dans lequel l'unité de contrôle-commande (27) est également propre à augmenter le couple appliqué par chaque moteur de contrôle (24) pour activer la transmission d'effort entre le moteur de traction associé (20) et un essieu destiné à être mis en mouvement par ledit moteur de traction (20).

10. Ensemble selon l'une quelconque des revendications 1 à 9, dans lequel le dispositif de traction (11) comprenant un unique convertisseur (46) relié entre l'unité d'alimentation (44) et plusieurs des moteurs de traction (20).

11. Ensemble selon l'une quelconque des revendications 1 à 10, dans lequel les moteurs de traction (20) sont des moteurs synchrones, de préférence des moteurs à aimants permanents.

12. Véhicule (10), notamment véhicule ferroviaire, comprenant :
- au moins deux essieux (12), et
- au moins un dispositif de traction (11) d'un ensemble selon l'une quelconque des revendications 1 à 11, dans lequel chaque bloc de transmission (22) est relié cinématiquement à un essieu (12) distinct.

## Patentansprüche

1. Anordnung, umfassend:
- eine Versorgungseinheit, und
- eine Antriebsvorrichtung (11) für ein Fahrzeug (10), insbesondere für ein Schienenfahrzeug, wobei die Vorrichtung umfasst:
∘ mindestens zwei Antriebsmotoren (20), wobei jeder Antriebsmotor (20) eine Ausgangswelle (40) umfasst, wobei jeder Antriebsmotor (20) von einer Versorgungseinheit versorgt wird,
∘ für jeden Antriebsmotor (20), einen Getriebeblock (22), umfassend Elemente, wobei mindestens eines der Elemente drehfest mit der Ausgangswelle (40) ist,
∘ für mindestens einen der Antriebsmotoren (20), einen zugeordneten Steuerungsmotor (24), wobei der oder jeder Steuerungsmotor (24), in einem Motormodus, geeignet ist, mindestens eines der Elemente des entsprechenden Getriebeblocks (22) in Rotation zu versetzen, und, in einem Generatormodus, durch mindestens eins der Elemente des entsprechenden Getriebeblocks (22) in Rotation versetzt zu werden, wobei der oder die Steuerungsmotoren (24) darauf abzielen die eventuellen Differenzen der Winkelpositionen und/oder der Rotationsgeschwindigkeiten der Antriebsmotoren (20) zu kompensieren,
∘ eine Einheit zur Speicherung von Energie (26), geeignet, um Energie mit dem oder jedem Steuerungsmotor (24) auszutauschen, wobei die Einheit zur Speicherung von Energie (26) unterschiedlich zur Versorgungseinheit (44) ist, und
∘ eine Steuerungsbefehlseinheit (27) des oder jedes Steuerungsmotors (24), geeignet, um mindestens ein Steuerungssignal zu empfangen und den oder jeden Steuerungsmotor (24) abhängig von mindestens einem Steuerungssignal zu steuern.

2. Anordnung nach Anspruch 1, wobei, wenn der oder einer der Steuerungsmotoren (24) in einem Motormodus betrieben wird, die Einheit zur Speicherung von Energie (26) Energie an den genannten Steuerungsmotor (24) bereitstellt, und wenn der oder einer der Steuerungsmotoren (24) in einem Generatormodus betrieben wird, die Einheit zur Speicherung von Energie (26) Energie aus dem genannten Steuerungsmotor (24) empfängt.

3. Anordnung nach Anspruch 1 oder 2, wobei jeder Getriebeblock (22) ein Platengetriebe ist, wobei jedes Planetengetriebe ein erstes, ein zweites und ein drittes Element umfasst, ausgewählt aus einem Innenplanetenrad (50), einem Außenplanetenrad (52), und einem Planetenradträger (54), welcher mindestens ein Planetenrad trägt, welches mit dem Innenplanetenrad (50) und mit dem Außenplanetenrad (52) eingreift, wobei das erste Element drehfest mit der Ausgangswelle (40) des entsprechenden Antriebsmotors (20) ist, wobei das zweite Element geeignet ist, eine Rotation einer entsprechenden Achse (12) des Fahrzeuges (10) zu erzeugen, wobei das dritte Element dafür konfiguriert ist, drehfest mit einer Ausgangswelle des entsprechenden Steuerungsmotors (24) zu sein.

4. Anordnung nach Anspruch 3, wobei, für mindestens ein Planetengetriebe, das erste Element das Außenplanetenrad (52) ist, das zweite Element der Planetenradträger (54) ist und das dritte Element das Innenplanetenrad (50) ist.

5. Anordnung nach einem der vorhergehenden Ansprüche 1 bis 4, wobei jeder von den Antriebsmotoren (20) und von dem oder den Steuerungsmotoren (24) einen Stator (40A, 60A) und einen in Bezug auf den Stator (40A, 60A) drehbaren Rotor (40B, 60B) umfasst, wobei die Antriebsvorrichtung (11) eine Immobilisierungseinheit (32) für mindestens einen der Antriebsmotoren (20), welcher einem Steuerungsmotor (24) zugeordnet ist, umfasst, wobei die Immobilisierungseinheit (32) beweglich in mindestens zwei Positionen ist: eine erste Position, in welcher die Rotoren (40B, 60B) der Antriebsmotoren (20) und der entsprechenden Steuerungsmotoren (24) frei sind, und eine zweiten Position, in welcher allein der Rotor (40B) des entsprechenden Antriebsmotors (20) immobilisiert ist,
wobei die Steuerungsbefehlseinheit (27) geeignet ist, eine Abwesenheit einer Versorgung der Antriebsmotoren (20), welche einem Halt der Antriebsmotoren entspricht, zu erfassen, wobei die Steuerungsbefehlseinheit (27) außerdem geeignet ist, die Immobilisierungseinheit (32) in der ersten Position aufrechtzuerhalten, wenn die Steuerungsbefehlseinheit (27) keine Abwesenheit der Versorgung des entsprechenden Antriebsmotors (20) erkennt, und die Immobilisierungseinheit (32) in die zweite Position zu überführen, wenn die Steuerungsbefehlseinheit (27) eine Abwesenheit einer Stromversorgung des entsprechenden Antriebsmotors (20) erkennt.

6. Anordnung (11) nach Anspruch 5, wobei die Immobilisierungseinheit (32) außerdem in eine dritte Position beweglich ist, in welcher nur der Rotor (60B) des entsprechenden Steuerungsmotors (24) immobilisiert ist, wobei die Steuerungsbefehlseinheit (27) außerdem geeignet ist, eine Anomalie zu erfassen oder ein Signal einer Anomalie für jeden Steuerungsmotor (24) zu empfangen, und geeignet ist, die Immobilisierungseinheit (32) in die dritte Position zu überführen, wenn eine Anomalie des entsprechenden Steuerungsmotors (24) erfasst wird.

7. Anordnung nach einem der Ansprüche 1 bis 6, wobei die Steuerungsbefehlseinheit (27) zum Messen oder zum Empfangen einer Messung einer Winkelposition und/oder einer Rotationsgeschwindigkeit der Ausgangwelle (40) jedes Antriebsmotors geeignet ist, und jeden Steuerungsmotor (24) gemäß einer gewünschten Rotationsgeschwindigkeit des entsprechenden Elements des Getriebeblocks (22) zu betreiben, wobei die genannte gewünschte Rotationsgeschwindigkeit in Abhängigkeit von der gemessenen Winkelposition und/oder der gemessenen Rotationsgeschwindigkeit für die Ausgangswelle (40) jedes Antriebsmotors festgelegt ist.

8. Anordnung nach einem der Ansprüche 1 bis 7, wobei die Steuerungsbefehlseinheit (27) geeignet ist, eine Anomalie zu erfassen oder ein Signal einer Anomalie für jeden Antriebsmotor (20) zu empfangen und das aufgebrachte Drehmoment durch den zugeordneten Steuerungsmotor (24) zu reduzieren, wenn eine Anomalie des zugeordneten Antriebsmotors (20) erfasst wird.

9. Anordnung nach Anspruch 8, wobei die Steuerungsbefehlseinheit (27) ebenfalls geeignet ist, das aufgebrachte Drehmoment durch jeden Steuerungsmotor (24) zu vergrößern, um die Kraftübertragung zwischen dem zugeordneten Antriebsmotor (20) und einer Achse zu aktivieren, welche dazu bestimmt ist, durch den genannten Antriebsmotor (20) in Bewegung versetzt zu werden.

10. Anordnung nach einem der vorhergehenden Ansprüche 1 bis 9, wobei die Antriebsvorrichtung (11) einen einzigen Konverter (46) umfasst, welcher zwischen die Versorgungseinheit (44) und mehrere der Antriebsmotoren (20) geschaltet ist.

11. Anordnung nach einem der vorhergehenden Ansprüche 1 bis 10, wobei die Antriebsmotoren (20) Synchronmotoren sind, vorzugsweise Permanentmagnetmotoren.

12. Fahrzeug (10), insbesondere Schienenfahrzeug, umfassend:
- mindestens zwei Achsen (12), und
- mindestens eine Antriebsvorrichtung (11) einer Anordnung nach einem der vorhergehenden Ansprüche 1 bis 11, wobei jeder Getriebeblock (22) kinematisch mit einer verschiedenen Achse (12) verbunden ist.

## Claims

1. Assembly comprising:
- a power supply unit, and
- a traction device (11) for a vehicle (10), particularly for a railway vehicle, the device comprising:
- at least two traction motors (20), each traction motor (20) comprising an output shaft (40), each traction motor (20) being supplied by the power supply unit,
- for each traction motor (20), a transmission assembly (22) comprising elements, at least one of the elements being secured in rotation with the output shaft (40),
- for at least one of the traction motors (20), an associated control motor (24), the or each control motor (24) being capable, in a motor mode, of rotating at least one of the elements of the corresponding transmission assembly (22), and, in a generator mode, of being driven in rotation by at least one of the elements of the corresponding transmission assembly (22), the control motor(s) (24) being intended to compensate for any differences in angular positions and/or in rotational speeds of the traction motors (20),
- an energy storage unit (26) capable of exchanging energy with the or each control motor (24), the energy storage unit (26) being different from the power supply unit (44), and
- an instrumentation and control unit (27) of the or each control motor (24), capable of receiving at least one control signal and of controlling the or each control motor (24) according to the at least one control signal.

2. Assembly according to claim 1, wherein when the or one of the control motors (24) is controlled in a motor mode, the energy storage unit (26) supplies energy to said control motor (24), and when the or one of the control motors (24) is controlled in a generator mode, the energy storage unit (26) receives energy from said control motor (24).

3. Assembly according to claim 1 or 2, wherein each transmission assembly (22) is a planetary gear train, each planetary gear comprising first, second and third elements, selected from among an inner sun gear (50), an outer sun gear (52), and a planet carrier (54) carrying at least one planetary gear meshing with the inner sun gear (50) and with the outer sun gear (52), the first element being secured in rotation with the output shaft (40) of the corresponding traction motor (20), the second element being capable of driving a respective axle (12) of the vehicle (10) in rotation, the third element being configured to be secured in rotation with an output shaft of the corresponding control motor (24).

4. Assembly according to claim 3, wherein, for at least one planetary gear train, the first element is the outer sun gear (52), the second element is the planet carrier (54) and the third element is the inner sun gear (50).

5. Assembly according to any one of claims 1 to 4, wherein each of the traction motors (20) and the control motor(s) (24) comprises a stator (40A, 60A) and a rotor (40B, 60B) movable in rotation relative to the stator (40A, 60A), the traction device (11) comprising an immobilisation unit (32) for at least one of the traction motors (20) associated with a control motor (24), the immobilisation unit (32) being movable according to at least two positions: a first position wherein the rotors (40B, 60B) of the corresponding traction motors (20) and control motors (24) are free and a second position wherein only the rotor (40B) of the corresponding traction motor (20) is immobilised,
the instrumentation and control unit (27) being capable of detecting a lack of power supply of the traction motors (20) corresponding to a stoppage of the traction motors, the instrumentation and control unit (27) being, also, capable of holding the immobilisation unit (32) in the first position when the instrumentation and control unit (27) does not detect a lack of power supply of the corresponding traction motor (20), and of switching the immobilisation unit (32) into the second position when the instrumentation and control unit (27) detects a lack of power supply of the corresponding traction motor (20).

6. Assembly (11) according to claim 5, wherein the immobilisation unit (32) is, furthermore, movable according to a third position in which only the rotor (60B) of the corresponding control motor (24) is immobilised, the instrumentation and control unit (27) being, furthermore, capable of detecting an anomaly or receiving an anomaly signal for each control motor (24), and capable of switching the immobilisation unit (32) into the third position when an anomaly of the corresponding control motor (24) is detected.

7. Assembly according to any one of claims 1 to 6, wherein the instrumentation and control unit (27) is capable of measuring or receiving a measurement of an angular position and/or a rotational speed of the output shaft (40) of each traction motor, and of controlling each control motor (24) according to a desired rotational speed of the corresponding element of the transmission assembly (22), said desired rotational speed being established according to the angular position and/or the rotational speed measured for the output shaft (40) of each traction motor.

8. Assembly according to any one of claims 1 to 7, wherein the instrumentation and control unit (27) is capable of detecting an anomaly or receiving an anomaly signal for each traction motor (20) and reducing the torque applied by the associated control motor (24) when an anomaly of the associated traction motor (20) is detected.

9. Assembly according to claim 8, wherein the instrumentation and control unit (27) is also capable of increasing the torque applied by each control motor (24) to activate force transmission between the associated traction motor (20) and an axle intended to be moved by said traction motor (20).

10. Assembly according to any one of claims 1 to 9, wherein the traction device (11) comprising a single converter (46) connected between the power supply unit (44) and several of the traction motors (20).

11. Assembly according to any one of claims 1 to 10, wherein the traction motors (20) are synchronous motors, preferably permanent magnet motors.

12. Vehicle (10), particularly a railway vehicle, comprising:
- at least two axles (12), and
- at least one traction device (11) of an assembly according to any one of claims 1 to 11, wherein each transmission assembly (22) is kinematically linked to a separate axle (12).
